# EUROPÄISCHE PATENTSCHRIFT

(11) **EP 1 904 752 B1**
(45) Veröffentlichungstag und Bekanntmachung des Hinweises auf die Patenterteilung: **28.10.2009**
(21) Anmeldenummer: 06761228.3
(22) Anmeldetag: 19.07.2006
(51) Int. Cl.: F16B 37/12, F16B 13/08

(54) **BEFESTIGUNGSELEMENT FÜR VERANKERUNGEN IN MASSIVUNTERGRÜNDEN**
FIXING ELEMENT FOR ANCHORING IN MASSIVE BASES
ELEMENT DE FIXATION POUR DES ANCRAGES DANS DES SUPPORTS MASSIFS

(30) Priorität: 21.07.2005 CH 12172005
(43) Veröffentlichungstag der Anmeldung: 02.04.2008
(73) Patentinhaber: Pama Reiter Stefan, 9485 Nendeln (LI)
(72) Erfinder: REITER, Stefan, FL-9485 Nendeln (LI)
(74) Vertreter: Hasler, Erich
(86) Internationale Anmeldenummer: PCT/CH2006/000377
(87) Internationale Veröffentlichungsnummer: WO 2007/009286

(56) Entgegenhaltungen:
- EP-A- 1 457 689
- WO-A-93/18312
- DE-A1- 4 113 381

## Beschreibung

Die Erfindung betrifft ein Befestigungselement für Verankerungen in Massivuntergründen, wie z.B. Beton, Stein, Vollziegel, Holz oder dgl., gemäss dem Oberbegriff des Patentanspruchs 1. Ein derartiges Befestigungselement ist aus der DE-A-41 13 381 bekannt.

Für Verankerungen im leichten Lastbereich in Massivuntergründen, wie z.B. Beton, Stein, Vollziegel, Holz oder dergleichen sind aus dem Stand der Technik verschiedene Befestigungstechniken und Befestigungselemente bekannt. Das wohl bekannteste Befestigungselement ist der klassische Spreizdübel, der meist aus Kunststoff besteht und in eine vorbereitete Aufnahmebohrung eingesteckt wird. Zur Befestigung eines Bauteils wird eine Schraube durch das Bauteil durchgesteckt und in den Dübel eingeschraubt. Die erzielbaren Lastwerte bei Kunststoffdübeln sind beschränkt. Sie weisen im Brandfall keine Sicherheit auf. Sie sind nicht zugzonentauglich und weisen keine Nachspreizung auf. Die einzuhaltenden Achs- und Randabstände sind relativ gross. Die Erstellung der Befestigung ist unabhängig davon, ob es sich um einen Kunststoff- oder um einen Metalldübel handelt, relativ umständlich, indem eine Schraube in den in die Aufnahmebohrung eingesetzten Dübel eingedreht werden muss. Der Dübeldurchmesser und damit der erforderliche Durchmesser der zu erstellenden Aufnahmebohrung ist deutlich grösser als der Anschlussdurchmesser der einzudrehenden Schraube.

Es sind auch bereits Befestigungselemente vorgeschlagen worden, die in eine vorbereitete Aufnahmebohrung eingeschlagen werden. Aus der DE-A-4113 381 ist ein Befestigungselement bekannt, das aus einer mit einem Kopfabschnitt versehenen Schraube besteht, die einen Verankerungsabschnitt mit einem Aussengewinde aufweist. Der Verankerungsabschnitt besitzt im Gewindebereich einen sich entgegen der Setzrichtung erweiternden Aussendurchmesser. Eine schraubenfederartige Spirale ist derart dimensioniert, dass sie im montierten Zustand in die Gewindegänge der Schraube eingreift und in einem setzungsseitig rückwärtigen Abschnitt des Gewindebereichs den grössten Aussendurchmesser des Verankerungsbereichs radial überragt. Ein geflachter Verankerungslappen erstreckt sich vom setzungsseitig rückwärtigen Ende der Spirale in Richtung des Kopfabschnitts uns soll beim schlagenden Eintreiben des Befestigungselements eine zusätzliche Fixierung der Spirale in der Aufnahmebohrung gewährleisten. Die Lastwerte dieses bekannten Befestigungselements sind nicht allzu hoch, da nur derjenige Bereiche der Spirale zur Verankerung beitragen, die im montierten Zustand den Aussendurchmesser des Verankerungsbereichs überragen. Der geflachte Verankerungslappen kann sich nach einer Demontage bei der erneuten der Schraube als hinderlich erweisen, da die Gefahr besteht, dass das vertikal abragende Ende der in der Aufnahmebohrung verbliebenen Spirale im Gewinde der Schraube verhakt. Das Befestigungselement weist keine Nachspreizung auf und ist daher für die Zugzone nicht geeignet.

Aufgabe der vorliegenden Erfindung ist es daher, den Nachteilen der Befestigungselemente des Stands der Technik abzuhelfen. Es soll insbesondere ein Befestigungselement für Verankerungen in Massivuntergründen, wie z.B. Beton, Stein, Vollziegel, Holz oder dgl., geschaffen werden, welches im leichten Lastbereich hohe Lastwerte aufweist. Das Befestigungselement soll für die Zugzone geeignet sein und insbesondere nachspreizende Eigenschaften aufweisen. Es soll einfach versetzbar, insbesondere durch Schlagmontage montierbar, und wieder demontierbar sein; eine Durchsteck- und eine Vorsteckmontage sollen ermöglicht sein. Für die Montage sollen keine Spezialwerkzeuge erforderlich sein. Das Befestigungselement soll bereits bei der Schlagmontage eine gewisse Vorspannung erhalten, die für eine Vorfixierung eines montierten Bauteils sorgt.

Die Lösung dieser Aufgaben besteht in einem Befestigungselement, welches die im kennzeichnenden Abschnitt des Patentanspruchs 1 angeführten Merkmale aufweist. Weiterbildungen und/oder vorteilhafte Ausführungsvarianten der Erfindung sind Gegenstand der abhängigen Patentansprüche.

Durch die Erfindung wird ein Befestigungselement für Verankerungen in Massivuntergründen, wie z.B. Beton, Stein, Vollziegel, Holz oder dgl., geschaffen, das einen Ankerbolzen mit einem Verankerungsabschnitt aufweist, der wenigstens über einen Teilbereich seiner Längserstreckung mit einer wendelartig umlaufenden Profilierung versehen ist. Ein gegenüber dem Verankerungsabschnitt radial erweiterter Kopfabschnitt schliesst entgegen einer Setzrichtung an den Verankerungsabschnitt an. Das Befestigungselement umfasst auch eine Schraubenfeder, die auf den mit der wendelartigen Profilierung versehenen Teilbereich des Verankerungsabschnitts vormontierbar ist. Die wendelartig umlaufende Profilierung ist von wenigstens zwei axial aneinander anschliessenden Konusabschnitten mit einer wendelförmig verlaufenden Mantelfläche gebildet, die sich jeweils in Setzrichtung erweitern. Die Konusabschnitte weisen eine Steigung auf, die grösser ist als eine Steigung der Schraubenfeder. Das setzungsseitig vordere Ende der Schraubenfeder stützt sich an einem vorderen Endbereich des setzungsseitig vordersten Konusabschnitts ab.

Durch die erfindungsgemässe Ausbildung des Befestigungselements, insbesondere durch die unterschiedlichen Steigungen der wendelartigen Profilierung in Form von wenigstens zwei Konusabschnitten und der Schraubenfeder, wird die Schraubenfeder bei der Schlagmontage in die Länge gezogen, was in einer erhöhten Steigung der Schraubenfeder resultiert. Die Steigung der Konusabschnitte ist dabei als der Abstand der Konusabschnitte voneinander bzw. von zwei axial übereinander liegenden, gleichartigen Punkten zweier benachbarter Konusabschnitte definiert. Die Steigung der Schraubenfeder ist als der Abstand benachbarter Gänge definiert. Durch die Dehnung der Schraubenfeder bei der Schlagmontage überragt die Schraubfeder den Aussendurchmesser des Verankerungsabschnitts praktisch über dessen gesamte Länge und führt zu einer kraft- und formschlüssigen Verankerung des Befestigungselements in der Aufnahmebohrung. Die Abstützung der Schraubenfeder im setzungsseitig vordersten Endbereich gewährleistet ihre Streckung bei der Schlagmontage. Durch die Strekkung wird die Feder auf Zug belastet und tendiert im gesetzten Zustand wieder in den Anfangszustand zurückzukehren. Dadurch erfährt das Befestigungselement eine gewisse Vorspannung, die zu einer Vorfixierung eines befestigten Bauteils führt. Für eine Justierung des Bauteils wird der Ankerbolzen geringfügig aus der Schraubenfeder herausgedreht und danach in gewünschten Umfang festgezogen. Bei einer Belastung auf Zug wird die Schraubenfeder wegen der sich in Setzrichtung erweiternden Konusabschnitte weiter aufgespreizt. Dies führt zu einer Vergrösserung der Haltewerte des in der Aufnahmebohrung versetzten Befestigungselements. In einer sich öffnenden Aufnahmebohrung bewirkt dieser Effekt eine Nachspreizung. Dadurch ist das Befestigungselement auch in der Zugzone einsetzbar. Die voneinander verschiedenen Steigungen der Konusabschnitte bzw. der Mantelfläche und der Schraubenfeder gewährleisten auch, dass die einmal montierte Schraubenfeder nicht verloren geht.

Die Verankerung erfolgt gleichmässig über die gesamte Länge des mit der wendelartigen Profilierung versehenen Verankerungsabschnitts. Dadurch sind auch Verankerungen mit relativ geringen Achs- und Randabständen ermöglicht. Die Montage erfolgt sehr einfach durch Einschlagen des Befestigungselements. Zur Demontage wird der Ankerbolzen einfach wieder aus der Aufnahmebohrung herausgedreht. Die Schraubenfeder gleitet dabei entlang der wendelförmigen Mantelfläche der Konusabschnitte und verbleibt in der Aufnahmebohrung. Das Befestigungselement ist somit oberflächenbündig demontierbar. Zur Wiederbefestigung wird der Ankerbolzen einfach wieder an die Aufnahmebohrung angesetzt und mit seinem mit der wendelartigen Profilierung versehenen Verankerungsabschnitt in die Schraubenfeder eingeschraubt. Zur Erleichterung des Einschraubvorgangs kann eine Anfasung des setzungsseitig vordersten Bereichs des vorderen Konusabschnitts vorgesehen sein. Wegen der mit dem erfindungsgemässen Befestigungselement erzielbaren hohen Haltewerte kann der Verankerungsbereich des Ankerbolzens mit einem relativ kleinen Aussendurchmesser ausgebildet sein. Dies hat den Vorteil, dass auch die Aufnahmebohrung entsprechend klein ausfallen kann.

Die Fixierung des setzungsseitig vorderen Endes der Schraubenfeder kann bei einem spitz zulaufenden Verankerungsabschnitt durch eine Umschlingung der Schraubenfeder erfolgen. In einer konstruktiv und fertigungstechnisch besonders einfachen Ausführungsvariante mit einem mit einer flachen Stirnfläche versehenen vorderen Konusabschnitt stützt sich das vordere Ende der Schraubenfeder einfach an der Stirnfläche ab. Dazu ist das setzungsseitig vordere Ende der Schraubenfeder entsprechend abgeknickt bzw. eingebogen.

Die axiale Länge des mit den Konusabschnitten versehenen Verankerungsabschnitts ist grösser als eine axiale Höhe der Schraubenfeder im entspannten bzw. im vormontierten Zustand.

Für eine einfache Montage und um den Vorspanneffekt zu gewährleisten sind ein aussendurchmesserkleinster Bereich der Konusabschnitte und eine Materialdicke der Schraubenfeder derart ausgebildet, dass die Summe des kleinsten Aussendurchmessers und der Materialdicke gleich oder geringfügig grösser ist als der grösste Aussendurchmesser der Konusabschnitte.

Für die Erzielung guter Haltewerte erweist es sich von Vorteil, wenn die wendelförmig verlaufende Mantelfläche der Konusabschnitte gegenüber einer Achse des Verankerungsabschnitts um einen Winkel von 5° bis 16°, vorzugsweise etwa 7° bis etwa 14° geneigt verläuft.

Eine Variante des Befestigungselements sieht vor, dass der Winkel, den die Mantelfläche jedes Konusabschnitts mit der Achse des Verankerungsabschnitts einschliesst, entgegen der Setzrichtung zunimmt. Die Zunahme des Winkels kann in Stufen, beispielsweise in drei Stufen, erfolgen. Der Winkel kann aber auch entgegen der Setzrichtung stetig zunehmen. Durch diese Massnahme wird das Nachspreizverhalten des Befestigungselements noch weiter verbessert.

Für die Gewährleistung einer erhöhten Sicherheit gegenüber Bränden und um eine Korrosionsbeständigkeit zu gewährleisten sind der Ankerbolzen und die Schraubenfeder aus Metall, vorzugsweise aus rostfreiem Stahl, gefertigt.

In einer Variante des Befestigungselements weist der Kopfabschnitt die Gestalt eines Sechskants auf. Dies ermöglicht das einfache Festziehen oder Lösen des Befestigungselements mit einem Gabel- oder Ringsschlüssel entsprechender Grösse.

In einer weiteren Variante des Befestigungselements kann vorgesehen sein, dass entgegen der Setzrichtung an den Sechskantkopf ein Bolzenabschnitt mit einem Anschlussgewinde anschliesst. Diese Variante ermöglicht nicht nur die Festlegung eines Bauteils an einem Untergrund, sondern auch den Anschluss weiterer Bauteile über eine Schraubverbindung. Auch kann das Befestigungselement im Untergrund verankert und ein Bauteil am abragenden Gewindebolzen befestigt werden. Der vom Kopfabschnitt abragende Gewindebolzen weist dabei eine deutlich grösseren Anschlussdurchmesser auf als der Verankerungsabschnitt des Ankerbolzens.

In weiteren Ausführungsvarianten des Befestigungselements weist der Kopfabschnitt die Gestalt eines Senkkopfs oder eines Linsenkopfs auf, der mit einem Angriffsmittel zur Drehmomentübertragung ausgestattet ist. Das Angriffsmittel zur Drehmomentübertragung kann als ein Innensechskant, eine Torx- oder Kreuzschlitzaufnahme, ein diagonal verlaufender Schlitz usw. ausgebildet sein. Das Anziehen oder Lösen des Befestigungselements kann dann mit entsprechend ausgebildeten Werkzeugen erfolgen.

Damit die Vorspannung des in die Aufnahmebohrung eingeschlagenen Befestigungselements bei allen Massivuntergründen gewährleistet ist, kann am Übergang vom Vierankerungsabschnitt zu einem aussendurchmessergrösseren Kopfabschnitt ein axial federbares Unterlageteil, beispielsweise ein Federring, eine Spannscheibe oder dergleichen vorgesehen sein.

Die genaue Anzahl der axial hintereinander angeordneten Konusabschnitte ist abhängig vom Durchmesser des Befestigungselements im Verankerungsbereich, von der gewünschten Setztiefe und von den erforderlichen Haltewerten.

Die Schraubenfeder ist vorzugsweise aus einem Draht aus Federstahl gewickelt. Der Draht ist kann einen kreisförmigen oder ovalen Querschnitt aufweisen. In einer weiteren Variante der Erfindung kann der Draht ein Profildraht mit einem unrunden Querschnitt sein. Der Federdraht mit unrundem Querschnitt gräbt sich noch besser in die Bohrlochwandung ein.

In einer weiteren Ausführungsvariante kann der Draht der Schraubenfeder auch mit einer reibungsmindernden Beschichtung versehen sein. Die Beschichtung erleichtert die axiale Streckung der Schraubenfeder bei der Schlagmontage des Befestigungselements und fördert das Nachspreizverhalten des Befestigungselements.

Weitere Vorteile und Merkmale ergeben sich aus der nachfolgenden Beschreibung von beispielsweisen Ausführungsvarianten der Erfindung unter Bezugnahme auf die schematischen Zeichnungen. Es zeigen in nicht massstabsgetreuer Darstellung:
- Fig.1: ein erstes Ausführungsbeispiel des Befestigungselements gemäss der Erfindung;
- Fig. 2: die Einzelkomponenten des Befestigungselements gemäss Fig.1;
- Fig. 3: eine in einer Aufnahmebohrung eingesetzte Variante des Befestigungselements;
- Fig. 4: das Befestigungselements aus Fig. 4 mit aus der Aufnahmebohrung herausgesdrehtem Ankerbolzen;
- Fig. 5 bis 7: drei Varianten des Befestigungselements mit unterschiedlich ausgebildeten Kopfabschnitten;
- Fig. 8: ein setzungsseitig vorderer Spitzenabschnitt einer weiteren Variante des Befestigungselements; und
- Fig. 9a - d: vier Querschnittsvarianten eines Federdrahtes für eine Schraubenfeder.

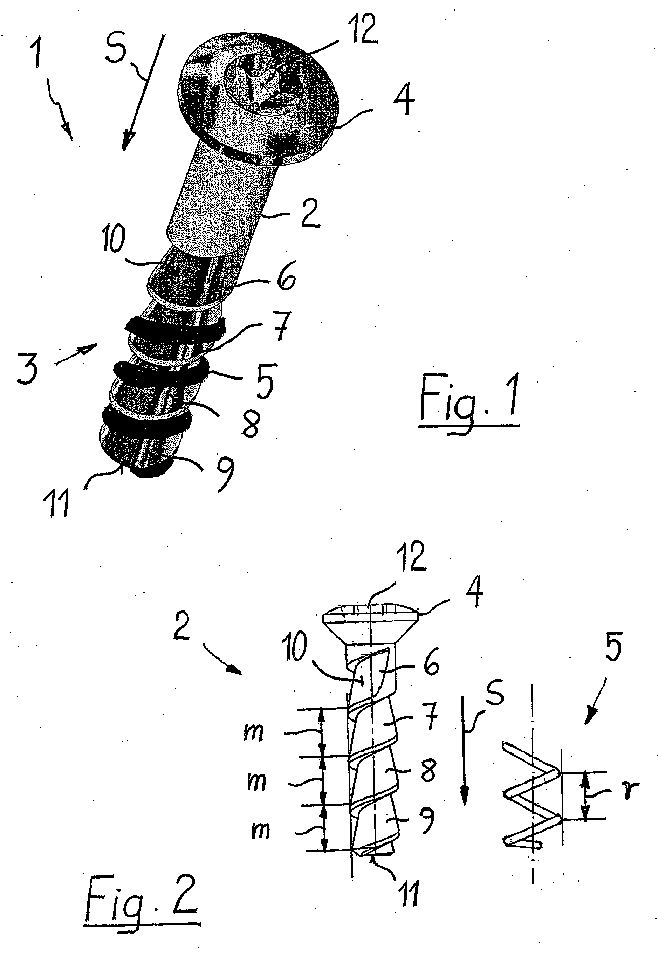

Das in Fig.1 und 2 dargestellte erste Ausführungsbeispiel des erfindungsgemässen Befestigungselements trägt gesamthaft das Bezugszeichen 1. Es umfasst einen Ankerbolzen 2 mit einem Verankerungsabschnitt 3 und einem Kopfabschnitt 4 sowie eine Schraubenfeder 5. Der Verankerungsabschnitt 3 ist mit einer Profilierung versehen, die von axial hintereinander angeordneten Konusabschnitten 6 , 7, 8 und 9 gebildet ist, die sich jeweils in eine Setzrichtung, die mit dem Pfeil S angedeutet ist, im Aussendurchmesser erweitern. Die Konusabschnitte 6-9 besitzen eine wendelförmig verlaufende Mantelfläche 10, die sich über den gesamten Verankerungsabschnitt 3 erstreckt. Die wendelförmig verlaufende Mantelfläche 10 ist gegenüber der Achse des Verankerungsabschnitts 3 um einen Winkel von 5° bis 10°, vorzugsweise etwa 6° bis etwa 8°, ganz besonders bevorzugt etwa 7° geneigt. Die Schraubenfeder 5 ist auf den Verankerungsabschnitt 3 montiert (Fig.1) und stützt sich an einem vorderen Endbereich des setzungsseitig vordersten Konusabschnitts 9 ab. Gemäss dem dargestellten Ausführungsbeispiel stützt sich die Schraubenfeder 5 an einer vorderen Stirnfläche 11 des setzungsseitig vordersten Konusabschnitts 9 ab. Die Konusabschnitte 6-9 weisen eine Steigung m auf, die grösser ist als eine Steigung r der Schraubenfeder 5. Die Steigung der Konusabschnitte ist dabei als der Abstand der Konusabschnitte voneinander bzw. von zwei axial übereinander liegenden, gleichartigen Punkten zweier benachbarter Konusabschnitte definiert. Die Steigung der Schraubenfeder ist als der Abstand benachbarter Gänge definiert. Die voneinander verschiedenen Steigungen der Konusabschnitte und der Schraubenfeder gewährleisten, dass die einmal montierte Schraubenfeder 5 nicht verloren geht. Die Materialdicke der Schraubenfeder 5 ist derart ausgebildet, dass die Summe eines kleinsten Aussendurchmessers der Konusabschnitte 6-9 und der Materialdicke gleich oder geringfügig grösser ist als der grösste Aussendurchmesser der Konusabschnitte 6-9. Der Verankerungsabschnitt weist mindestens zwei Konusabschnitte auf. Das dargestellte Ausführungsbeispiel besitzt vier axial hintereinander angeordnete Konusabschnitte 6-9. Die Anzahl der möglichen Konusabschnitte hängt von der Gesamtlänge des Verankerungsabschnitts, vom maximalen Aussendurchmesser des Verankerungsabschnitts und von den geforderten Mindesthaltewerten des Befestigungselements ab, durch welche der Mindestdurchmesser der Konusabschnitte festgelegt wird. Die axiale Länge des mit Konusabschnitten versehenen Verankerungsabschnitts 3 ist grösser als eine axiale Höhe der Schraubenfeder 5 im entspannten bzw. im vormontierten Zustand.

Der durchmessergrössere Kopfabschnitt 4 ist als ein flanschartig erweiterter Linsenkopf ausgebildet und weist ein innenliegendes Angriffsmittel 12 zur Drehmomentübertragung auf. Beispielsweise ist das Angriffmittel 12 als ein Innensechskant, eine Torx- oder Kreuzschlitzaufnahme ausgebildet. In einer weiteren Variante kann das Angriffsmittel zur Drehmomentübertragung auch einfach als ein diagonal verlaufender Schlitz oder dergleichen ausgebildet sein. Der Ankerbolzen 2 ist aus Metall, bevorzugt aus einem rostfreien Stahl. Die Schraubenfeder 5 besteht aus einem Draht aus Federstahl. Sie kann auch mit einer reibungsmindernden Beschichtung versehen sein.

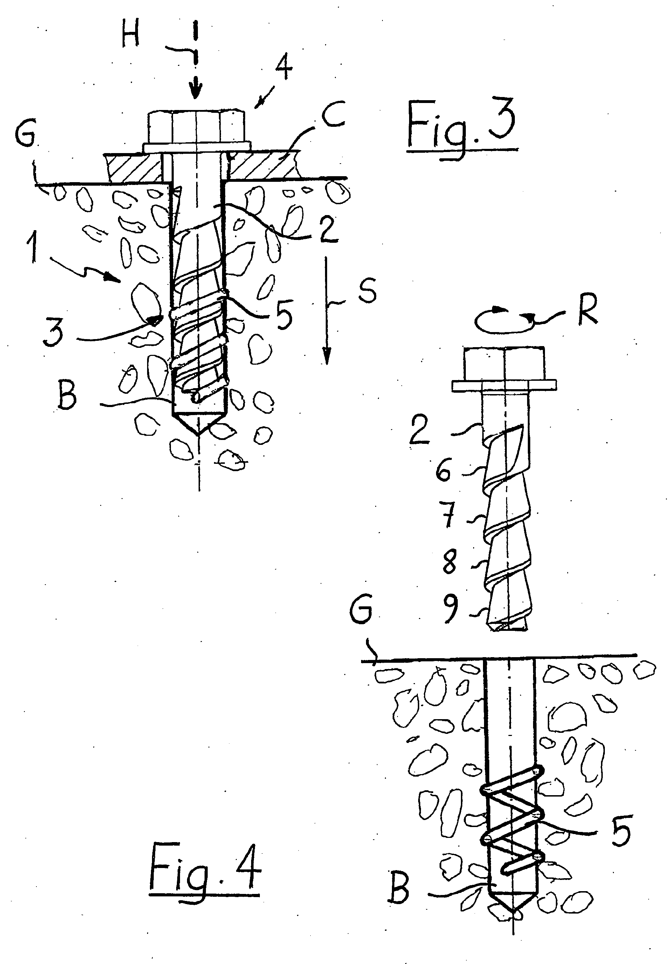

Fig. 3 zeigt eine im Kopfabschnitt 4 abgewandelte Variante des Befestigungselements 1, das in eine Aufnahmebohrung B in einem Massivuntergrund G, wie beispielsweise Beton, Stein, Vollziegel, Holz oder dgl., eingesetzt ist. Der Kopfabschnitt 4 ist im dargestellten Ausführungsbeispiel als ein flanschartig erweiterter Sechskant ausgebildet. Der Sechskant bildet zugleich das Angriffsmittel für die Drehmomentübertragung, das in diesem Fall aussen liegt.

Ein Pfeil H symbolisiert, dass das Befestigungselement 1 schlagend in die Aufnahmebohrung B eingetrieben wird. Beispielsweise erfolgt dies durch Hammerschläge auf die setzungsseitig rückwärtige Fläche des Sechskantkopfes. Bei der Schlagmontage wird die Schraubenfeder 5 in die Länge gezogen, was in einer erhöhten Steigung r der Schraubenfeder 5, bzw. in einem vergrösserten Abstand benachbarter Gänge resultiert. Dadurch überragt die Schraubfeder 5 den Aussendurchmesser des Verankerungsabschnitts 3 praktisch über dessen gesamte Länge und führt zu einer kraft- und formschlüssigen Verankerung des Befestigungselements 1in der Aufnahmebohrung B. Die Abstützung der Schraubenfeder 5 im setzungsseitig vorderen Endbereich 11 gewährleistet ihre Streckung bei der Schlagmontage. Durch die Streckung wird die Schraubenfeder 5auf Zug belastet und tendiert im gesetzten Zustand wieder in den Anfangszustand zurückzukehren. Dadurch erfährt das Befestigungselement 1 eine gewisse Vorspannung, die zu einer Vorfixierung eines befestigten Bauteils C führt. Für eine Justierung des Bauteils C kann der Ankerbolzen 2 geringfügig aus der Schraubenfeder 5 herausgedreht und danach in gewünschten Umfang festgezogen werden. Bei einer Belastung auf Zug wird die Schraubenfeder 5 wegen der in Setzrichtung S sich erweiternden Konusabschnitte 6-9 weiter aufgespreizt. Dies führt zu einer Vergrösserung der Haltewerte des in der Aufnahmebohrung B versetzten Befestigungselements 1. In einer sich öffnenden Aufnahmebohrung bewirkt dieser Effekt eine Nachspreizung. Dadurch ist das Befestigungselement 1 auch in der Zugzone einsetzbar.

Fig. 4 zeigt einen demontierten Befestigungspunkt, in dem der Ankerbolzen 2 des Befestigungselements 1 aus der Schraubenfeder 5 herausgedreht ist. Die Drehrichtung ist durch den Doppelpfeil R angedeutet. Die Schraubenfeder 5 verbleibt in der Aufnahmebohrung B. Falls der Befestigungspunkt wieder benützt werden soll, um ein Bauteil zu montieren, kann der Ankerbolzen 2 einfach wieder in die Aufnahmebohrung eingesetzt und in die dort verbliebene Schraubenfeder 5 hineingedreht werden.

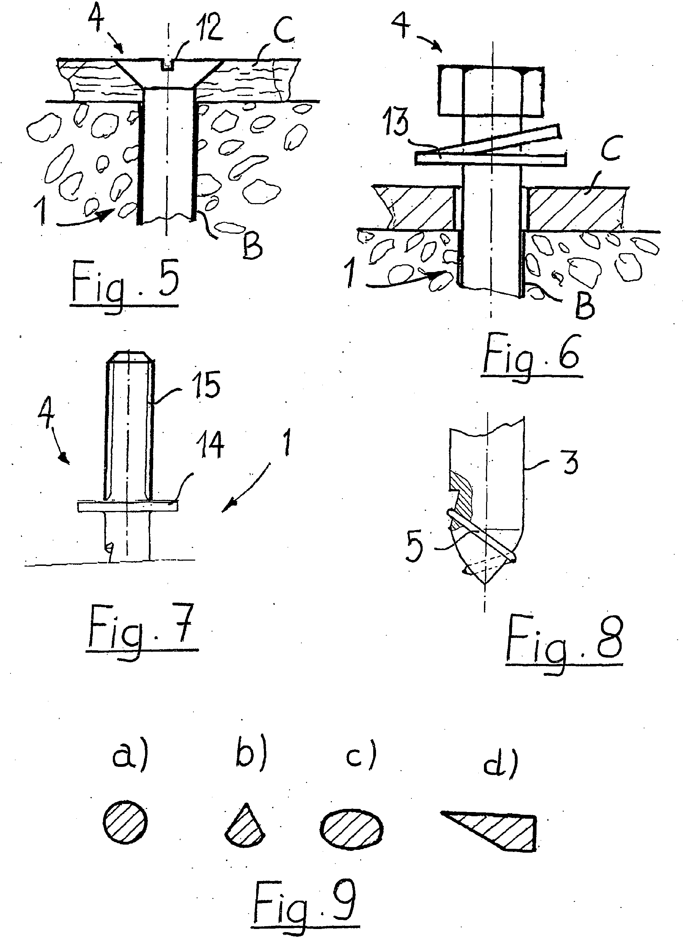

Fig. 5 zeigt eine weitere Ausführungsvariante des Befestigungselements 1, bei dem der Kopfabschnitt 4 als ein Senkkopf ausgebildet ist. Der Kopfabschnitt 4 ist wiederum mit einem Angriffsmittel 12 zur Drehmomentübertragung versehen, welches als ein diagonal verlaufender Schlitz für einen Schraubendreher mit flacher Klinge ausgebildet ist. Fig. 5 zeigt symbolisch die Befestigung eines Bauteils C, wie beispielsweise Holz, das eine gewisse Elastizität aufweist. Diese Elastizität des befestigten Bauteils C unterstützt die Vorspannwirkung des schlagend in die Aufnahmebohrung B eingetriebenen Befestigungselements. Bei dem in Fig. 6 dargestellten Befestigungselement 1, dessen Kopfabschnitt 4 wiederum als ein Sechskant ausgebildet ist, ist im Fall der Befestigung eines starren Bauteils C, wie beispielsweise eines Metallteils, diese Elastizität durch die Zwischenlage eines federbaren Unterlageteils 13, beispielsweise einer Spannscheibe, eines Sprengrings oder dergleichen, gewährleistet.

Fig. 7 zeigt eine weitere Variante des Befestigungselements 1, bei dem der Kopfabschnitt 4 eine flanschartige Erweiterung 14 und einen entgegen der Setzrichtung anschliessenden Gewindebolzen 15 aufweist. Anstelle der flanschartigen Erweiterung kann auch ein Sechskantkopf vorgesehen sein, an den der Gewindebolzen anschliesst.

Fig. 8 zeigt eine alternative Abstützung der Schraubenfeder 5 im setzungsseitig vorderen Bereich des Verankerungsabschnitts 3. Gemäss dem dargestellten Ausführungsbeispiel verjüngt sich der Verankerungsabschnitt 3 konisch. Zur Festlegung der Schraubenfeder 5 umschlingt deren setzungsseitig vorderer Endbereich den konischen Bereich des Verankerungsabschnitts 3.

Fig. 9a - 9d schliesslich zeigen verschiedene Querschnitte des Federdrahts, aus dem die Schraubenfeder gewickelt ist. Neben einem kreisförmigen Querschnitt (Fig. 9a) kann der Federdraht auch von der Kreisform abweichende Querschnittsformen aufweisen. Die kann sich vorteilhaft auf die erzielbaren Haltewerte auswirken.

## Patentansprüche

1. Befestigungselement für Verankerungen in Massivuntergründen, wie z.B. Beton, Stein, Vollziegel, Holz oder dgl., umfassend einen Ankerbolzen (2) mit einem Verankerungsabschnitt (3), der wenigstens über einen Teilbereich seiner Längserstreckung mit einer wendelartig umlaufenden Profilierung versehen ist, und einem Kopfabschnitt (4), der entgegen einer Setzrichtung (S) an den Verankerungsabschnitt (3) anschliesst und gegenüber diesem radial erweitert ist, und eine Schraubenfeder (5), die auf den mit der wendelartigen Profilierung versehenen Teilbereich des Verankerungsabschnitts (3) vormontierbar ist, **dadurch gekennzeichnet, dass** die wendelartig umlaufende Profilierung von wenigstens zwei axial aneinander anschliessenden Konusabschnitten (6 - 9) mit einer wendelförmig verlaufenden Mantelfläche (10) gebildet ist, die sich jeweils in Setzrichtung (S) erweitern, dass die Konusabschnitte (6 - 9) eine Steigung (m) aufweisen, die grösser ist als eine Steigung (r) der Schraubenfede (5), deren setzungsseitig vorderes Ende sich an einem vorderen Endbereich des setzungsseitig vorderen Konusabschnitts (9) abstützt.

2. Befestigungselement nach Anspruch 1, **dadurch gekennzeichnet, dass** der mit den Konusabschnitten (6 - 9) versehene Verankerungsabschnitt (3) eine axiale Länge aufweist, die grösser ist als eine axiale Höhe der Schraubenfeder (5) im entspannten bzw. im vormontierten Zustand.

3. Befestigungselement nach Anspruch 1 oder 2, **dadurch gekennzeichnet, dass** sich das setzungsseitig vordere Ende der Schraubenfeder (5) an einer Stirnfläche (11) des vordersten Konusabschnitts (9) abstützt.

4. Befestigungselement nach einem der vorangehenden Ansprüche, **dadurch gekennzeichnet, dass** ein aussendurchmesserkleinster Bereich der Konusabschnitte (6 - 9) und eine Materialdicke der Schraubenfeder (5) derart ausgebildet sind, dass die Summe des kleinsten Aussendurchmessers und der Materialdikke gleich oder geringfügig grösser ist als der grösste Aussendurchmesser der Konusabschnitte (6-9).

5. Befestigungselement nach einem der vorangehenden Ansprüche, **dadurch gekennzeichnet, dass** die wendelförmig verlaufende Mantelfläche (10) der Konusabschnitte (6 - 9) gegenüber einer Achse des Verankerungsabschnitts (3) um einen Winkel von 5° bis 16° geneigt verläuft.

6. Befestigungselement nach Anspruch 5, **dadurch gekennzeichnet, dass** die wendelförmig verlaufende Mantelfläche (10) der Konusabschnitte (6 - 9) gegenüber einer Achse des Verankerungsabschnitts (3) um einen Winkel von etwa 7° bis etwa 14° geneigt verläuft.

7. Befestigungselement nach Anspruch 5 oder 6, **dadurch gekennzeichnet, dass** der Winkel, den die Mantelfläche jedes Konusabschnitts mit der Achse des Verankerungsabschnitts einschliesst, entgegen der Setzrichtung (S) zunimmt.

8. Befestigungselement nach Anspruch 7, **dadurch gekennzeichnet, dass** jeder Konusabschnitt gestuft ausgebildet ist und der Winkel, den die Mantelfläche jedes Konusabschnitts mit der Achse des Verankerungsabschnitts einschliesst, entgegen der Setzrichtung (S) in Stufen zunimmt.

9. Befestigungselement nach Anspruch 8, **dadurch gekennzeichnet, dass** jeder Konusabschnitt drei Stufen aufweist.

10. Befestigungselement nach Anspruch 5 oder 6, **dadurch gekennzeichnet, dass** der Winkel, den die Mantelfläche jedes Konusabschnitts mit der Achse des Verankerungsabschnitts einschliesst, entgegen der Setzrichtung (S) stetig zunimmt.

11. Befestigungselement nach einem der vorangehenden Ansprüche, **dadurch gekennzeichnet, dass** der Ankerbolzen (2) aus Metall, vorzugsweise aus rostfreiem Stahl, besteht.

12. Befestigungselement nach einem der vorangehenden Ansprüche, **dadurch gekennzeichnet, dass** der Kopfabschnitt (4) gegenüber dem Verankerungsabschnitt (3) radial erweitert ist und die Gestalt eines Sechkants aufweist.

13. Befestigungselement nach Anspruch 12, **dadurch gekennzeichnet, dass** entgegen der Setzrichtung (S) an den Sechskantkopf ein Bolzenabschnitt (15) mit einem Anschlussgewinde anschliesst.

14. Befestigungselement nach einem der Ansprüche 1-11, **dadurch gekennzeichnet, dass** der Kopfabschnitt (4) die Gestalt eines Senkkopfs oder eines Linsenkopfs aufweist und mit einem Angriffsmittel (12) zur Drehmomentübertragung ausgestattet ist.

15. Befestigungselement nach Anspruch 14, **dadurch gekennzeichnet, dass** das Angriffsmittel (12) als ein Innensechskant, eine Torx- oder Kreuzschlitzaufnahme, ein diagonal verlaufender Schlitz usw. ausgebildet ist.

16. Befestigungselement nach einem der vorangehenden Ansprüche, **dadurch gekennzeichnet, dass** am Übergang vom Verankerungsabschnitt (3) zu einem aussendurchmessergrösseren Kopfabschnitt (4) ein axial federbares Unterlageteil (13), beispielsweise ein Federring, eine Spannscheibe oder dergleichen vorgesehen ist.

17. Befestigungselement nach einem der vorangehenden Ansprüche, **dadurch gekennzeichnet, dass** die Schraubenfeder (5) aus einem Draht aus Federstahl gewickelt ist.

18. Befestigungselement nach einem der vorangehenden Ansprüche, **dadurch gekennzeichnet, dass** die Schraubenfeder (5) aus einem Profildraht mit einem unrunden Querschnitt gewickelt ist.

19. Befestigungselement nach einem der vorangehenden Ansprüche, **dadurch gekennzeichnet, dass** der Draht der Schraubenfeder (5) mit einer reibungsmindernden Beschichtung versehen ist.

## Claims

1. Fastener for anchoring in solid base, like e.g. concrete, stone, solid brick, wood or such, comprising
an anchor bolt (2) with an anchoring section (3), which is provided with profiling which runs peripherally in a coil-like manner over at least a partial region of the anchoring section's lengthwise extension;
a head section (4) which adjoins the anchoring section opposite a setting direction (S) and which has been radially expanded relative to the anchoring section (49); and
a helical spring (5) which can be premounted on the partial region of the anchoring section (3),
**characterised in that**
the profiling which runs peripherally in the coil-like manner is formed by at least two axially adjoining cone sections (6-9) with a jacket surface (10) which runs in a coil shape, which sections widen in a setting direction (S) of the anchor bolt (2), that the cone sections (6-9) have a pitch (m) which is greater than a pitch (r) of the helical spring (5), and a front end of the helical spring on the setting side being supported on a front end region of the cone section (9) which is exposed on the setting side of the anchor bolt (2).

2. Fastener according to claim 1, **characterised in that** the anchoring section (3) provided with the cone sections (6-9) has an axial length which is larger than an axial height of the helical spring (5) in a relieved or in a premounted state.

3. Fastener according to claim 1 or 2, **characterised in that** the front end of the helical spring (5) is supported on a face surface (11) of the cone section (9) exposed on the setting side.

4. Fastener after one of the preceding claims, **characterised in that** a region of the cone sections (6-9) which has a smallest outside diameter and a material thickness of the helical spring (5) are made such that a sum of the smallest outside diameter and of the material thickness is equal to or slightly greater than a largest outside diameter of the cone sections (6-9).

5. Fastener after one of the preceding claims, **characterised in that** the jacket surface (10) of the cone sections which runs in a coil shape runs tilted by an angle from 5° to 16° relative to an axis of the anchoring section (3).

6. Fastener according to claim 5, **characterised in that** the jacket surface (10) of the cone sections (6-9) which runs in a coil shape runs tilted by an angle from roughly 7° to roughly 14° relative to the axis of the anchoring section (3).

7. Fastener according to claim 5 or 6, **characterised in that** the angle which is enclosed by the jacket surface of each cone section with the axis of the anchoring section increases opposite the setting direction (S).

8. Fastener according to claim 7, **characterised in that** each cone section is made stepped and the angle which is enclosed by the jacket surface of each cone section with the axis of the anchoring section increases in steps opposite the setting direction (S).

9. Fastener according to claim 8, **characterised in that** each cone section has three steps.

10. Fastener according to claim 5 or 6, **characterised in that** the angle which is enclosed by the jacket surface of each cone section with the axis of the anchoring section increases continuously opposite the setting direction (S).

11. Fastener after one of the preceding claims, **characterised in that** the anchor bolt consists of metal, preferably of stainless steel.

12. Fastener after one of the preceding claims, **characterised in that** the head section (4) is radially widened relative to the anchoring section (3) and has the shape of a hexagon.

13. Fastener according to claim 12, **characterised in that** opposite the setting direction (S), the hexagonal head is adjoined by a bolt section (15) with a connecting thread.

14. Fastener after one of the claims 1 to 11, **characterised in that** the head section (4) has a shape of a countersunk head or a lens head and is provided with application means (12) for transmission of torque.

15. Fastener according to claim 14, **characterised in that** the application means (12) is made as a hexagon socket, a torx receiver or crossed slot receiver, or a diagonally running slot or the like.

16. Fastener after one of the preceding claims, **characterised in that** on a transition from the anchoring section (3) to a head section (4) with a larger outside diameter there is an axially elastic liner part (13) for example a lock washer, a tightening disk or such provided.

17. Fastener as claimed in claim 1, wherein the helical spring is wound from a wire of spring steel.

18. Fastener after one of the preceding claims, **characterised in that** the helical spring (5) is wound from a profile wire with a nonround cross section.

19. Fastener after one of the preceding claims, **characterised in that** the wire of the helical spring (5) is provided with a friction-reducing coating.

## Revendications

1. Elément de fixation pour ancrages dans des supports massifs, comme par exemple du béton, de la pierre, de la brique pleine, du bois ou équivalent, comprenant un boulon d'ancrage (2) avec une section d'ancrage (3) qui est pourvue, au moins sur une zone partielle de son extension en longueur, d'un profilage périphérique de type hélicoïdal et avec une portion de tête (4) qui se rattache à la section d'ancrage (3) à l'encontre d'un sens de tassement (S) et qui est élargie radialement par rapport à celle-ci, et comprenant un ressort cylindrique (5) qui peut être préassemblé sur la zone partielle de la section d'ancrage (3), zone partielle pourvue du profilage de type hélicoïdal, **caractérisé en ce que** le profilage périphérique de type hélicoïdal est formé par au moins deux sections de cône (6-9) qui se rattachent l'une à l'autre dans le sens axial avec une surface d'enveloppe (10) hélicoïdale qui s'élargissent respectivement dans le sens de tassement (S), que les sections de cône (6-9) présentent un pas (m) qui est plus grand qu'un pas (r) du ressort cylindrique (5) dont l'extrémité antérieure du côté du tassement s'appuie sur une zone d'extrémité antérieure de la section de cône antérieure du côté du tassement (9).

2. Elément de fixation selon la revendication 1, **caractérisé en ce que** la section d'ancrage (3) pourvue des sections de cône (6-9) présente une longueur axiale qui est plus grande qu'une hauteur axiale du ressort cylindrique (5) à l'état détendu ou préassemblé.

3. Elément de fixation selon la revendication 1 ou 2, **caractérisé en ce que** l'extrémité antérieure du côté du tassement du ressort cylindrique (5) s'appuie sur une face frontale (11) de la section de cône la plus en antérieure (9).

4. Elément de fixation selon l'une des revendications précédentes, **caractérisé en ce qu'**une zone de plus petit diamètre extérieur des sections de cône (6-9) et une épaisseur de matière du ressort cylindrique (5) sont configurées de telle manière que la somme du plus petit diamètre extérieur et de l'épaisseur de matière est égale ou légèrement plus grande que le plus grand diamètre extérieur des sections de cône (6-9).

5. Elément de fixation selon l'une des revendications précédentes, **caractérisé en ce que** la surface d'enveloppe hélicoïdale (10) des sections de cône (6-9) est inclinée par rapport à un axe de la section d'ancrage (3) d'un angle de 5° à 16°.

6. Elément de fixation selon la revendication 5, **caractérisé en ce que** la surface d'enveloppe hélicoïdale (10) des sections de cône (6-9) est inclinée par rapport à un axe de la section d'ancrage (3) d'un angle d'environ 7° à environ 14°.

7. Elément de fixation selon la revendication 5 ou 6, **caractérisé en ce que** l'angle que la surface d'enveloppe de chaque section de cône inclut avec l'axe de la section d'ancrage augmente à l'encontre du sens de tassement (S).

8. Elément de fixation selon la revendication 7, **caractérisé en ce que** chaque section de cône est configurée en gradins et l'angle que la surface d'enveloppe de chaque section de cône inclut avec l'axe de la section d'ancrage augmente en gradins à l'encontre du sens de tassement (S).

9. Elément de fixation selon la revendication 7, **caractérisé en ce que** chaque section de cône présente trois gradins.

10. Elément de fixation selon la revendication 5 ou 6, **caractérisé en ce que** l'angle que la surface d'enveloppe de chaque section de cône inclut avec l'axe de la section d'ancrage augmente de manière continue à l'encontre du sens de tassement (S).

11. Elément de fixation selon l'une des revendications précédentes, **caractérisé en ce que** le boulon d'ancrage (2) est en métal, de préférence en acier inoxydable.

12. Elément de fixation selon l'une des revendications précédentes, **caractérisé en ce que** la portion de tête (4) est élargie dans le sens radial par rapport à la section d'ancrage (3) et présente la forme d'un hexagone.

13. Elément de fixation selon la revendication 12, **caractérisé en ce qu'**une portion de boulon (15) avec un filet de raccord se rattache à la tête hexagonale à l'encontre du sens de tassement (S).

14. Elément de fixation selon l'une des revendications 1 à 11, **caractérisé en ce que** la portion de tête (4) présente la forme d'une tête fraisée ou d'une tête goutte-de-suif et est équipée d'un moyen d'attaque (12) pour la transmission du couple de rotation.

15. Elément de fixation selon la revendication 14, **caractérisé en ce que** le moyen d'attaque (12) est configuré comme un six pans creux, un logement Torx ou cruciforme, une fente diagonale etc.

16. Elément de fixation selon l'une des revendications précédentes, **caractérisé en ce qu'**une pièce de calage à retour élastique axial (13), par exemple une rondelle-ressort, une rondelle élastique bombée ou équivalent, est prévue à la transition de la section d'ancrage (3) et d'une portion de tête de diamètre extérieur plus grand (4).

17. Elément de fixation selon l'une des revendications précédentes, **caractérisé en ce que** le ressort cylindrique (5) est enroulé en un fil en acier à ressort.

18. Elément de fixation selon l'une des revendications précédentes, **caractérisé en ce que** le ressort cylindrique (5) est enroulé en un fil profilé avec une section en faux rond.

19. Elément de fixation selon l'une des revendications précédentes, **caractérisé en ce que** le fil du ressort cylindrique (5) est pourvu d'une enduction qui diminue la friction.
